# EUROPÄISCHE PATENTSCHRIFT

(11) **EP 4 185 489 B1**
(45) Veröffentlichungstag und Bekanntmachung des Hinweises auf die Patenterteilung: **08.10.2025**
(21) Anmeldenummer: 21733927.4
(22) Anmeldetag: 14.06.2021
(51) Int. Cl.: B60Q 1/32, B60J 10/80, B60J 10/82, B60J 10/84, B60J 10/86, B60Q 3/217, B60Q 3/41, B60Q 3/46, B60Q 3/50, B60Q 3/51, B60Q 3/54, B60Q 3/44, B60Q 3/78, B60Q 3/56, B60J 1/08, B60J 1/10, B60J 5/04, B60J 5/10, B60J 5/12, B60J 5/06

(54) **LICHTLEISTENEINRICHTUNG FÜR EINEN TÜRFLÜGEL EINES EINSTIEGSSYSTEMS EINES SCHIENENFAHRZEUGS**
LUMINOUS STRIP FOR TRAIN ENTRANCE DOOR
BANDE LUMINEUSE POUR PORTE D'ENTRÉE DE TRAIN

(30) Priorität: 22.07.2020 DE 102020004412
(43) Veröffentlichungstag der Anmeldung: 31.05.2023
(73) Patentinhaber: Knorr-Bremse Gesellschaft mit beschränkter Haftung, 2340 Mödling (AT)
(72) Erfinder: BRAMAUER, Johann, 3341 Ybbsitz (AT); PECHHACKER, Matthias, 3331 Sonntagberg (AT); KLENNER, Hannes, 3300 Amstetten (AT)
(74) Vertreter: Wiedemann, Markus
(86) Internationale Anmeldenummer: PCT/EP2021/065899
(87) Internationale Veröffentlichungsnummer: WO 2022/017682

(56) Entgegenhaltungen:
- EP-A1- 1 533 205
- EP-A2- 2 018 996
- EP-B1- 1 533 205
- CN-U- 204 264 155
- DE-A1- 102011 106 318
- DE-A1- 102012 011 524
- DE-A1- 102012 017 281
- DE-U1- 202011 103 660
- GB-A- 2 475 940
- US-A1- 2008 170 406

## Beschreibung

Die Erfindung betrifft einen Türflügel eines Einstiegssystems eines Schienenfahrzeugs gemäß dem Oberbegriff von Anspruch 1, sowie ein Einstiegssystem eines Schienenfahrzeugs gemäß dem Oberbegriff von Anspruch 20.

Bei Schienenfahrzeugen kann es sicherheitstechnisch von Bedeutung sein, dass Fahrgäste beim Ein- und Ausstieg rechtzeitig auf sich schließende Türflügel und/oder auf eine Öffnungsbereitschaft der Türflügel aufmerksam gemacht werden. Derzeit wird diese Funktionalität durch eine entsprechende Beleuchtung der Türdrucktasten oder durch separate Leuchtmelder an den Schließkanten der Türflügel erreicht.

DE 10 2010 019 764 B4 offenbart eine Integration von Leuchtmitteln in einem unmittelbar an einer Schließkante angeordneten Fingerschutzgummi eines Türflügels. Da an der Schließkante jedoch in der Regel noch weitere Komponenten für sicherheitsrelevante Funktionen vorhanden sind, ist eine Hinzufügung von Leuchtmitteln an der Schließkante eines Türflügels relativ komplex und kann zu Zielkonflikten führen. Weiterhin muss die Schließkante bzw. eine Dichtung an der Schließkante von vorneherein speziell ausgebildet werden, um die Leuchtmittel aufnehmen zu können.

Die gattungsbildende DE 10 2012 011 524 thematisiert allgemein eine Verwendung des bei einem PKW im Bereich einer Scheibe ausgestrahlten Lichts einer Lichtleisteneinrichtung als Hinweis- oder Warnlicht für Fahrzeuginsassen oder andere Verkehrsteilnehmer. In EP 1 533 205 A1 dient von einer in eine Trittstufe eines Türeinstiegssystems eines Schienenfahrzeugs eingelassenen Lichtleiste emittiertes Licht zur Warnung vor einer Lücke zwischen der Trittleiste und einem Bahnsteig. In GB 2 475 940 A dient eine in einem Seitenschweller eines PKW eingelassene Lichtleiste, welche Lichtaustrittsöffnungen hinterleuchtet, zur Darstellung einer Information. DE 20 2011 103 660 U1 offenbart eine Signalisierungseinrichtung zur Anzeige eines beabsichtigten Anfahrens eines Verkehrsmittels, wobei Leuchtmittel an mindestens einer Außenseite des Verkehrsmittels vorgesehen sind, welche eingerichtet und angesteuert sind, um mindestens zwei unterschiedliche Lichtmuster zu erzeugen, wobei ein erstes Lichtverteilungsmuster bei geöffneten Türen des Verkehrsmittels erzeugbar ist und ein zweites Lichtverteilungsmuster bei einem beabsichtigten Abfahren des Verkehrsmittels erzeugbar ist. Offenbart wird ebenfalls eine Steuereinrichtung für die

Signalisierungseinrichtung, welche eine Zentralsteuerung und eine Anzahl von Wagensteuerungen umfasst. Die CN204264155U offenbart eine zweiflügelige Türe eines Verkehrsmittels mit einem von einem Controller gesteuerten LED-Streifen, der den Arbeitszustand der zweiflügeligen Tür darstellt.

Der vorliegenden Erfindung liegt die Aufgabe zugrunde, einen Türflügel anzugeben, an welchem mit geringem Aufwand Lichtsignale für Passagiere außerhalb und innerhalb des Fahrzeugs erzeugt werden können. Weiterhin soll auch ein Einstiegssystem eines Schienenfahrzeugs mit einem solchen Türflügel zur Verfügung gestellt werden.

Diese Aufgabe wird erfindungsgemäß durch die Merkmale der Ansprüche 1 und 20 gelöst.

### Offenbarung der Erfindung

In einem ersten Aspekt offenbart die Erfindung einen Türflügel eines Einstiegssystems eines Schienenfahrzeugs mit
a) wenigstens einer Fensteröffnung, welche eine Fensterlaibung aufweist, die an der Fensteröffnung eine umlaufende innere und der Fensteröffnung zugewandte Fläche ausbildet,
b) einer an oder in der Fensteröffnung gehaltenen Fensterscheibe, wobei
c) die Lichtleisteneinrichtung an oder in der Fensterlaibung zerstörungsfrei lösbar befestigt ist, und wobei
d) die Lichtleisteneinrichtung wenigstens aufweist:
   d1) wenigstens eine mit einer Anzahl von in Reihe beabstandet angeordneten Lichtquellen versehene Lichtleiste,
   d2) wenigstens ein Halte- und Montageprofil, in welchem die wenigstens eine Lichtleiste aufnehmbar und welche mit Mitteln zur Anbringung an der Fensterlaibung versehen ist, wobei
   d3) das Halte- und Montageprofil wenigstens eine Licht-Durchtrittsöffnung derart aufweist, dass von den Lichtquellen erzeugtes Licht durch die wenigstens eine Licht-Durchtrittsöffnung hindurch dringt, und
      wobei
   d4) das Halte- und Montageprofil mit Ausnahme der wenigstens einen Licht-Durchtrittsöffnung opak ist.
   Gemäß der Erfindung ist vorgesehen, dass
e) die Lichtleisteneinrichtung derart an oder in der Fensterlaibung angeordnet ist, dass von den Lichtquellen erzeugtes Licht durch die Fensterscheibe hindurch in Richtung einer Außenseite und in Richtung einer Innenseite des Türflügels gelangt, und dass die wenigstens eine Licht-Durchtrittsöffnung derart angeordnet und ausgebildet ist, dass von den Lichtquellen erzeugtes und durch die wenigstens eine Licht-Durchtrittsöffnung tretendes Licht senkrecht zur Fensterscheibe gerichtet ist.

Das Halte- und Montageprofil hat insbesondere eine Mehrfachfunktion, indem es - zur Fixierung oder zum Halten der ansonsten nicht mit dem Türflügel oder der Fensterlaibung verbundenen Lichtleiste an dem Türflügel, und - zur Befestigung der Lichtleiste an der Fensterlaibung, und - zum Richten der von den Lichtquellen emittierten Lichts in wenigstens eine bestimmte Richtung vorgesehen ist.

In einem zweiten Aspekt offenbart die Erfindung ein Einstiegssystem eines Schienenfahrzeugs mit wenigstens einer Türöffnung und einem Türflügel, welcher gegenüber der Türöffnung beweglich geführt ist, wobei der Türflügel durch einen solchen Türflügel gebildet wird.

Die Erfindung hat zum einen den Vorteil, dass die Lichtleisteneinrichtung auf einfache Weise an oder in der Fensterlaibung zerstörungsfrei lösbar befestigt werden kann, beispielsweise durch wenigstens eine Schraubverbindung, ohne dass die Fensterlaibung hierzu verändert werden oder eine besondere Ausgestaltung aufweisen muss.

Zum andern kann die Lichtleisteneinrichtung als Nachrüstkomponente an dem Türflügel an oder in dessen Fensterlaibung auf einfache Weise nachgerüstet werden, auch wenn der Türflügel zuvor keine solche Lichtleisteneinrichtung aufgewiesen hat. Da an einer Fensterlaibung in der Regel keine weiteren Funktionen vorgesehen sind, kann dort auch kein Zielkonflikt mit weiteren insbesondere sicherheitsrelevanten Funktionen entstehen.

Wenn eine Außenseite des Türflügels beispielsweise teilweise oder vollständig von der Fensterscheibe abgedeckt ist, dann ist die Fensterlaibung lediglich von innen zugänglich, so dass dann auch die Lichtleisteneinrichtung von der Innenseite des Türflügels her an der Fensterlaibung (z.B. als Nachrüstkomponente) montiert bzw. befestigt ist.

Bevorzugt wird die Lichtleiste durch einen flexiblen, langgestreckten und flachen Körper gebildet, an oder in welchem die Lichtquellen, insbesondere LED's in Reihe hintereinander beabstandet angeordnet sind.

Auch kann die Lichtleiste einen wenigstens teilweise transparenten Kunststoffkörper umfassen, in welchen ein LED-Band mit den in Reihe hintereinander beabstandet angeordneten LED's eingegossen oder eingespritzt ist. Der Kunststoffkörper und das LED-Band können insbesondere flexibel oder elastisch sein. Insbesondere sind der Kunststoffkörper und/oder das LED-Band parallel zur Fensterscheibe angeordnet.

Dabei können die Lichtleiste und insbesondere der Kunststoffkörper im Querschnitt gesehen ein Außenprofil aufweisen, welches komplementär zu einem Innenprofil des Halte- und Montageprofils ausgebildet ist. Dann können die Lichtleiste und insbesondere der Kunststoffkörper mit dem eingegossenen oder eingespritzten LED-Band in einer Kammer, die zwischen der Halte- und Montageleiste, der Fensterlaibung und der Fensterscheibe ausgebildet wird, gekammert werden, ohne dass beispielsweise eine mechanische Verbindung zwischen dem Halte- und Montageprofil und der Lichtleiste bzw. dem Kunststoffkörper vorhanden oder notwendig ist.

Weiterhin kann der Kunststoffkörper homogen transparent oder inhomogen transparent ausgeführt sein. Homogen transparent meint, dass der Kunststoffkörper über sein gesamtes Volumen eine konstante Transparenz aufweist. Dies führt dazu, dass von dem eingegossenen oder eingespritzten LED-Band emittiertes Licht innerhalb des Kunststoffkörpers in alle Richtungen mit etwa gleicher Intensität verteilt abgestrahlt wird. Bei einem inhomogen transparenten Kunststoffkörper weist dagegen wenigstens ein erster Abschnitt eine größere Transparenz auf als wenigstens ein zweiter Abschnitt. Dann kann mehr Licht durch den wenigstens einen ersten Abschnitt hindurch nach außen dringen als durch den wenigstens einen zweiten Abschnitt. Dadurch kann die Abstrahlung von Licht in eine bestimmte Richtung bzw. in bestimmte Richtungen gezielt beeinflusst werden.

Insbesondere kann die Lichtleisteneinrichtung als Nachrüstkomponente zum Nachrüsten an oder in der Fensterlaibung des Türflügels vorgesehen sein. Hierzu müssen dann der Türflügel bzw. dessen Fensterlaibung nicht verändert oder angepasst werden.

Das Halte- und Montageprofil kann im Querschnitt gesehen wenigstens Folgendes aufweisen:
a) einen parallel zur Lichtleiste und zur Fensterscheibe verlaufenden ersten Schenkel,
b) einen parallel zur Lichtleiste und senkrecht zur Fensterscheibe verlaufenden und von dem ersten Schenkel im Wesentlichen senkrecht abgekanteten zweiten Schenkel,
c) einen von dem ersten Schenkel insbesondere schräg wegragenden dritten Schenkel, welcher die Mittel zur Anbringung an der Fensterlaibung aufweist.

Der dritte Schenkel kann dabei lediglich zur Montage des Halte- und Montageprofils an oder in der Fensterlaibung vorgesehen sein und keine Licht-Durchtrittsöffnung aufweisen. Jedoch ist auch möglich, dass der dritte Schenkel wenigstens eine Licht-Durchtrittsöffnung aufweist.

Insbesondere kann (können) der erste Schenkel und/oder der zweite Schenkel und/oder der dritte Schenkel mit wenigstens einer Licht-Durchtrittsöffnung versehen sein. Alternativ oder zusätzlich können auch der erste Schenkel und/oder der zweite Schenkel und/oder der dritte Schenkel transparent ausgeführt sein, so dass das von den Lichtquellen erzeugte Licht hindurchdringen kann.

Beispielsweise können Licht-Durchtrittsöffnungen in dem Halte- und Montageprofil derart angeordnet sein, dass eine Abstrahlung oder ein Emittieren von Licht mittels der Lichtleisteneinrichtung in eine Richtung parallel zur Fensterscheibe und/oder in eine oder beide Richtungen senkrecht zur Fensterscheibe erfolgt. Dann können Lichtsignale zu einer Außenseite und/oder zu einer Innenseite des Türflügels hin emittiert werden. Dabei weist die Außenseite des Türflügels bezogen auf einen Innenraum des Schienenfahrzeugs nach außen und die Innenseite des Türflügels nach innen in den Innenraum. Mit diesen Maßnahmen können Fahrgästen, welche sich innerhalb und außerhalb des Schienenfahrzeugs befinden, Lichtsignale übermittelt werden, welche den gerade vorliegenden Status des Türflügels signalisieren.

Beispielsweise können die Mittel zur Anbringung der Lichtleisteneinrichtung in oder an der Fensterlaibung Durchstecköffnungen für Befestigungsschrauben umfassen, welche dann beispielsweise in Bohrlöchern der Fensterlaibung gekontert werden.

Das Halte- und Montageprofil kann aus einem Metall gefertigt und dann steif oder begrenzt biegbar ausgeführt sein, insbesondere dann, wenn die Lichtleisteneinrichtung als Nachrüstkomponente vorgesehen ist, um eine Anpassung an einen von einer geraden oder ebenen Form abweichenden Form des Türflügels bzw. der Fensterlaibung vornehmen zu können. Mit anderen Worten kann dann bei einem gekrümmten Verlauf des Türflügels bzw. der Fensterlaibung die Lichtleisteneinrichtung entsprechend diesem gekrümmten Verlauf gebogen und dann an oder in der Fensterlaibung befestigt werden.

Da wie oben beschrieben, die Lichtleiste und insbesondere der Kunststoffkörper und das LED-Band bevorzugt ebenfalls flexibel oder elastisch sind, ist dies ohne weiteres möglich. Gemäß einer Weiterbildung kann die Dicke D der Lichtleisteneinrichtung kleiner sein als die Tiefe T der Fensterlaibung, wobei die Dicke D und die Tiefe T senkrecht zur Fensterscheibe gemessen werden. Dann steht die Lichtleisteneinrichtung nicht über die Fensterlaibung vor, was im Hinblick auf eine Verletzungsgefahr vorteilhaft ist. Insbesondere ist in einer Richtung senkrecht zur Fensterscheibe gesehen die Lichtleisteneinrichtung in der Fensterlaibung versenkt angeordnet.

Auch kann (können) die Lichtleiste und/oder das Halte- und Montageprofil einen Diffusor enthalten, um eine gleichmäßige Lichtverteilung zu erzielen.

Gemäß einer Weiterbildung könnte die Lichtleiste mit dem Halte- und Montageprofil auch eine Baueinheit bilden.

Gemäß einer besonders zu bevorzugenden Weiterbildung kann die Lichtleisteneinrichtung eine insbesondere elektronische Steuerung umfassen, welche abhängig von einem Eingangssignal wenigstens eine Lichtquelle der Lichtquellen der Lichtleiste insbesondere selektiv derart aktiviert oder ansteuert, dass sie Licht abstrahlt. Das Eingangssignal wird von einer Türflügelsteuerung der Vorrichtung erzeugt, welche den Türflügel steuert. Insofern weist die Steuerung einen Steueranschluss für das Eingangssignal auf und ist ausgebildet, dass Sie das Eingangssignal verarbeiten kann. Auch kann die wenigstens eine Licht-Durchtrittsöffnung als Informationsdarstellungs-Durchtrittöffnung derart ausgeführt sein, dass der Umriss der Informationsdarstellungs-Durchtrittöffnung eine visuell darstellbare Information bildet. Alternativ kann in oder an der Licht-Durchtrittsöffnung ein transparenter (lichtdurchlässiger) Körper (z.B. eine Folie) angeordnet sein, an welchem die visuell darstellbare Information abgebildet ist und welcher von wenigstens einer Lichtquelle durchleuchtbar ist, so dass die visuelle Information lichtverstärkt dargestellt werden kann.

Die Information kann insbesondere wenigstens ein alphanummerisches Zeichen, eine Ziffer, einen Buchstaben, eine Graphik, ein Symbol und/oder ein Piktogramm umfassen. Unter einer visuell darstellbaren Information ist daher eine Information zu verstehen, welche von einem Menschen verstanden bzw. interpretiert werden kann, wenn er sie sieht.

Die wenigstens eine Informationsdarstellungs-Durchtrittöffnung kann beispielsweise durch ein entsprechendes Stanzen des Halte- und Montageprofils hergestellt sein, um deren Umriss auszubilden. Alternativ kann in der Informationsdarstellungs-Durchtrittöffnung auch ein beispielsweise transparenter (lichtdurchlässige) Körper (z.B. Folie) angeordnet sein, welcher von wenigstens einer Lichtquelle durchleuchtbar ist, so dass die visuelle Information dargestellt werden kann.

Beispielsweise können mehrere auf dem Halte- und Montageprofil in Reihe hintereinander, übereinander oder untereinander angeordnete Informationsdarstellungs-Durchtrittöffnungen vorgesehen sein, um Begriffe oder Wörter als visuelle Informationen darstellen zu können.

Dabei kann die Steuerung derart ausgebildet sein, dass sie abhängig von dem Eingangssignal selektiv wenigstens eine Lichtquelle der Lichtleiste aktiviert, welche im Bereich der wenigstens einen Informationsdarstellungs-Durchtrittöffnung angeordnet ist. Im Bereich der Durchtrittsöffnung angeordnet meint vor dem Hintergrund, dass das Halte- und Montageprofil die Lichtleiste überdeckt oder übergreift, dass sich die wenigstens eine, durch die Steuerung selektiv aktivierte Lichtquelle der Lichtleiste und die Informationsdarstellungs-Durchtrittöffnung im Wesentlichen überdecken, so dass das von der Lichtquelle ausgestrahlte Licht im Wesentlichen direkt durch die Informationsdarstellungs-Durchtrittöffnung hindurch nach außen dringen kann. Durch das hindurchtretende Licht wird dann die durch die wenigstens eine Informationsdarstellungs-Durchtrittöffnung verkörperte visuelle Information hinterleuchtet, so dass die betreffende Information von einem Betrachter wie einem Fahrgast des Schienenfahrzeugs wahrgenommen werden kann.

Es versteht sich, dass mehrere, beispielsweise in Reihe hintereinander angeordnete Lichtquellen selektiv angesteuert werden können, die im Bereich mehrerer Informationsdarstellungs-Durchtrittöffnungen angeordnet sind, um beispielsweise aus mehreren alphanumerischen Zeichen zusammengesetzte Begriffe, Wörter oder Sätze als visuelle Informationen darstellen zu können. Die visuell dargestellte Information kann dabei insbesondere auf den Zustand des Türflügels oder der Türflügel bezogen sein (Beispiel: "Türe kann geöffnet werden" oder "Tür schließt"). Bezogen auf dieses Beispiel kann, wenn der Türflügelzustand eine Öffnung des Türflügels erlaubt, durch eine erste Informationsdarstellungs-Durchtrittöffnung ein erster Pfeil dargestellt werden, der in die Öffnungsrichtung des Türflügels weist. Im anderen Fall kann, wenn die Türsteuerung ein Schließen des Türflügels vorgibt, durch eine zweite Informationsdarstellungs-Durchtrittöffnung ein zweiter Pfeil dargestellt werden, der in die Schließrichtung des Türflügels weist.

Auch kann die Lichtleiste einen ersten Abschnitt von ersten insbesondere in Reihe angeordneten Lichtquellen umfasst, welche Licht einer ersten Farbe ausstrahlen, und getrennt von dem ersten Abschnitt einen zweiten Abschnitt von zweiten insbesondere in Reihe angeordneten Lichtquellen, welche Licht einer zweiten, in Bezug auf die erste Farbe unterschiedlichen Farbe ausstrahlen.

Dies kann dadurch realisiert sein, dass die Lichtquellen LED's unterschiedlicher Farbe des Lichts und/oder LED's mit einstellbarer Lichtfarbe umfassen, wobei die Einstellung der Farbe des Lichts durch die (elektronische) Steuerung gesteuert ist.

Dan kann beispielsweise der erste Abschnitt von ersten Lichtquellen im Bereich wenigstens einer ersten Informationsdarstellungs-Durchtrittöffnung angeordnet sein, welche eine erste Information darstellt, und dass der zweite Abschnitt von zweiten Lichtquellen im Bereich wenigstens einer zweiten Informationsdarstellungs-Durchtrittöffnung angeordnet ist, welche eine zweite, von der ersten Information abweichende Information darstellt. Die wenigstens eine erste Informationsdarstellungs-Durchtrittöffnung repräsentiert oder verkörpert dann eine erste Information und die wenigstens eine zweite Informationsdarstellungs-Durchtrittöffnung eine zweite Information.

Die Steuerung kann dann abhängig von einem Eingangssignal selektiv entweder den ersten Abschnitt von ersten Lichtquellen oder den zweiten Abschnitt von zweiten Lichtquellen derart aktivieren, dass er Licht abstrahlt.

Mit anderen Worten kann dann die wenigstens eine erste Informationsdarstellungs-Durchtrittöffnung durch ein Licht erster Farbe und die wenigstens eine zweite Informationsdarstellungs-Durchtrittöffnung durch ein Licht zweiter Farbe hinterleuchtet werden. Abhängig von der Ansteuerung durch die Steuerung kann daher eine erste Information mit einem Licht erster Farbe und eine zweite Information mit einem Licht zweiter Farbe hinterleuchtet werden.

Bezogen auf das obige Beispiel des Türzustands kann beispielsweise die Information: "Türe kann geöffnet werden" mit einem Licht grüner Farbe und die Information "Tür schließt" mit einem Licht roter Farbe hinterleuchtet werden.

Bezogen auf dieses Beispiel kann auch alternativ oder zusätzlich der erste Pfeil, welcher ein mögliches Öffnen des Türflügels symbolisiert, mit einem Licht grüner Farbe hinterleuchtet werden, und der zweite Pfeil, welcher ein (notwendiges) Schließen des Türflügels symbolisiert, mit einem Licht roter Farbe hinterleuchtet werden.

Alternativ oder zusätzlich kann wenigstens eine Licht-Durchtrittsöffnung mit einem Farbfilter versehen sein, welcher lediglich eine Farbe des von wenigstens einer Lichtquelle erzeugten und durch die wenigstens eine Licht-Durchtrittsöffnung hindurchtretenden Lichts passieren lässt oder eine bestimmte Farbe ausfiltert.

Ein Farbfilter lässt nur eine bestimmte Farbe, d.h. eine Strahlung bestimmter Wellenlänge passieren oder filtert eine bestimmte Farbe aus. Ein solcher Farbfilter kann beispielsweise aus eingefärbtem Glas, Kunststoff oder eingefärbter Folie bestehen. Der Farbfilter kann beispielsweise in der wenigstens einen Licht-Durchtrittsöffnung angeordnet sein, oder auch bezogen auf die Richtung des von der wenigstens einen Lichtquelle abgestrahlten Lichts davor oder dahinter.

Der Vorteil einer Verwendung von solchen Farbfiltern besteht darin, dass dann keine Lichtquellen wie z.B. LED's unterschiedlicher Farbe des Lichts und/oder Lichtquellen wie z.B. LED's mit einstellbarer Lichtfarbe notwendig sind, um die visuellen Informationen mit unterschiedlichen Farben darzustellen. Vielmehr sind dann übliche LED's ausreichend.

Dann kann wenigstens eine erste Licht-Durchtrittsöffnung mit einem ersten Farbfilter versehen sein, welcher eine erste Farbe des von wenigstens einer ersten Lichtquelle erzeugten und durch die erste Licht-Durchtrittsöffnungen hindurchtretenden Lichts passieren lässt oder ausfiltert, und wenigstens eine zweite Licht-Durchtrittsöffnung mit einem zweiten Farbfilter versehen sein, welcher eine zweite, von der ersten Farbe abweichende Farbe des von wenigstens einer zweiten Lichtquelle erzeugten und durch die wenigstens eine zweite Licht-Durchtrittsöffnung hindurchtretenden Lichts passieren lässt oder ausfiltert.

Auch kann die wenigstens eine erste Licht-Durchtrittsöffnung eine erste Informationsdarstellungs-Durchtrittöffnung bilden, welche eine erste Information darstellt, und die wenigstens eine zweite Licht-Durchtrittsöffnung eine zweite Informationsdarstellungs-Durchtrittöffnung bilden, welche eine zweite, von der ersten Information abweichende Information darstellt.

Bezogen auf das obige Beispiel können die wenigstens eine erste Informationsdarstellungs-Durchtrittöffnung und die wenigstens eine zweite Informationsdarstellungs-Durchtrittöffnung visuelle Informationen wiedergeben, welche sich insbesondere auf den Zustand des Türflügels oder der Türflügel beziehen (Beispiel: "Türe kann geöffnet werden" oder "Tür schließt"). Bezogen auf dieses Beispiel kann auch, wenn der Türflügelzustand eine Öffnung des Türflügels erlaubt, durch eine erste Informationsdarstellungs-Durchtrittöffnung ein erster Pfeil dargestellt werden, der in die Öffnungsrichtung des Türflügels weist. Im anderen Fall kann, wenn die Türsteuerung ein Schließen des Türflügels vorgibt, durch eine zweite Informationsdarstellungs-Durchtrittöffnung ein zweiter Pfeil dargestellt werden, der in die Schließrichtung des Türflügels weist.

Die Steuerung kann dann derart ausgebildet sein, dass sie abhängig von dem Eingangssignal selektiv wenigstens eine erste Lichtquelle der Lichtleiste aktiviert, welche im Bereich der wenigstens einen ersten Informationsdarstellungs-Durchtrittöffnung oder wenigstens eine zweite Lichtquelle der Lichtleiste aktiviert, welche im Bereich der wenigstens einen zweiten Informationsdarstellungs-Durchtrittöffnung angeordnet ist.

Bezogen auf das obige Beispiel des Türzustands kann beispielsweise die Information: "Türe kann geöffnet werden" mit einem Licht grüner Farbe und die Information "Tür schließt" mit einem Licht roter Farbe hinterleuchtet werden. Bezogen auf dieses Beispiel kann auch alternativ oder zusätzlich der erste Pfeil, welcher ein mögliches Öffnen des Türflügels symbolisiert, mit einem Licht grüner Farbe hinterleuchtet werden, und der zweite Pfeil, welcher ein (notwendiges) Schließen des Türflügels symbolisiert, mit einem Licht roter Farbe hinterleuchtet werden. Die jeweilige Farbe ist durch den betreffenden Farbfilter in oder an der betreffenden wenigstens einen Informationsdarstellungs-Durchtrittöffnung bedingt.

Bei der Lichtleisteneinrichtung kann das Halte- und Montageprofil im Querschnitt gesehen wenigstens Folgendes aufweisen:
a) einen parallel zur Lichtleiste und zur Fensterscheibe verlaufenden ersten Schenkel,
b) einen parallel zur Lichtleiste und senkrecht zur Fensterscheibe verlaufenden und von dem ersten Schenkel im Wesentlichen senkrecht abgekanteten zweiten Schenkel,
c) einen von dem ersten Schenkel insbesondere schräg wegragenden dritten Schenkel, welcher die Mittel zur Anbringung an der Fensterlaibung aufweist.

Der erste Schenkel und/oder der zweite Schenkel kann (können) mit wenigstens einer Licht-Durchtrittsöffnung versehen sein. Weiterhin können die Mittel zur Anbringung an der Fensterlaibung Durchstecköffnungen für Befestigungsschrauben umfassen. Auch kann bei der Lichtleisteneinrichtung das Halte- und Montageprofil aus einem Metall gefertigt sein.

Bei dem Türflügel kann die Lichtleisteneinrichtung an oder in einem in Gebrauchslage des Türflügels gesehen vertikalen Abschnitt und/oder horizontalen Abschnitt der Fensterlaibung zerstörungsfrei lösbar befestigt sein. Auch kann bei dem Türflügel die Licht-Durchtrittsöffnung derart angeordnet und ausgebildet sein, dass von den Lichtquellen erzeugtes, und durch die Licht-Durchtrittsöffnung tretendes Licht parallel und/oder senkrecht zur Fensterscheibe gerichtet ist. Bei dem Türflügel kann auch die Lichtleisteneinrichtung derart an oder in der Fensterlaibung angeordnet sein, dass von den Lichtquellen erzeugtes Licht durch die Fensterscheibe hindurch in Richtung (Z) einer Außenseite und/oder in Richtung (Y) einer Innenseite des Türflügels und/oder in Richtung (X) parallel zur Fensterscheibe gelangen kann. Weiterhin können bei dem Türflügel Licht-Durchtrittsöffnungen in dem ersten Schenkel und/oder wenigstens in dem zweiten Schenkel des Halte- und Montageprofils ausgebildet sein. Auch kann bei dem Türflügel im Querschnitt gesehen eine Kammer zwischen dem Halte- und Montageprofil, der Fensterlaibung und der Fensterscheibe ausgebildet sein, in welcher wenigstens die Lichtleiste gehalten ist. Nicht zuletzt kann bei dem Türflügel die Lichtleisteneinrichtung in der Fensterlaibung versenkt angeordnet sein.

Wie eingangs beschrieben, bezieht sich die Erfindung auch auf ein Einstiegssystem eines Schienenfahrzeugs mit wenigstens einer Türöffnung und einem Türflügel, welcher gegenüber der Türöffnung beweglich geführt ist, wobei das Einstiegssystem die oben beschriebene Vorrichtung aufweist.

### Zeichnung

Nachstehend sind Ausführungsbeispiele der Erfindung in der Zeichnung dargestellt und in der nachfolgenden Beschreibung näher erläutert. In der Zeichnung zeigt
- Fig. 1: eine Darstellung einer Innenseite eines Türflügels mit einer Lichtleisteneinrichtung gemäß einer bevorzugten Ausführungsform der Erfindung;
- Fig.2: eine teilweise aufgeschnittene, perspektivische Ansicht der Innenseite des Türflügels von Fig. 1;
- Fig.3: eine Querschnittsdarstellung des Türflügels entlang der Linie III-III von Fig. 2;
- Fig. 4: eine schematische und perspektivische Darstellung einer weiteren Ausführungsform der Lichtleisteneinrichtung.

### Beschreibung der Ausführungsbeispiele

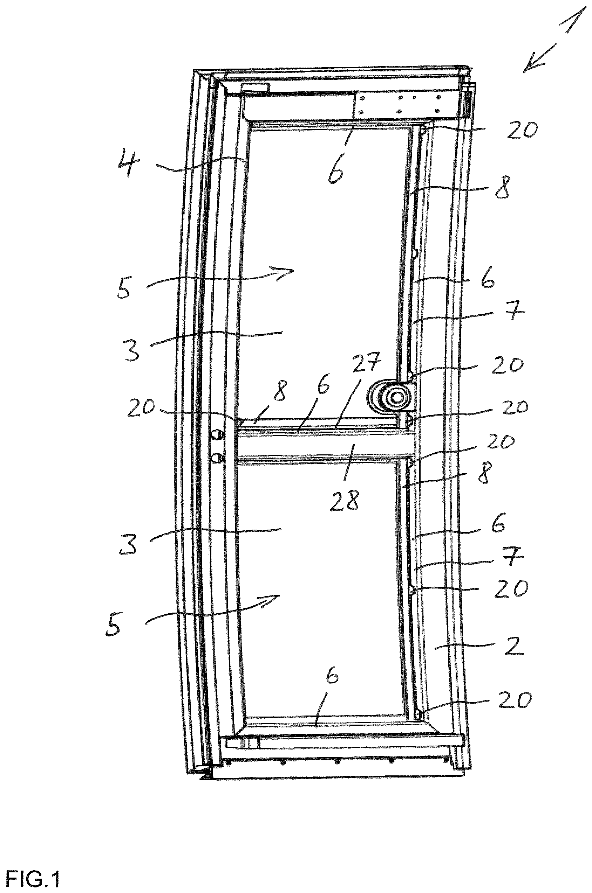

Ein in **Fig. 1** aus der Sicht des Inneren eines Schienenfahrzeugs dargestellter Türflügel 1 eines Schienenfahrzeugs weist einen Türrahmen 2 und hier beispielsweise eine Fensterscheibe 3 auf, welche in einem Fensterrahmen 4 gehalten ist und hier beispielsweise zwei Fensteröffnungen 5 verschließt. Die Fensteröffnungen 5 weisen jeweils eine Fensterlaibung 6 auf, die an der jeweiligen Fensteröffnung 5 eine umlaufende innere und der jeweiligen Fensteröffnung 5 zugewandte Fläche ausbildet. Der Türflügel 1 ist in gegenüber einer hier nicht gezeigten Türöffnung des Schienenfahrzeugs beweglich geführt und Bestandteil eines Einstiegssystems des Schienenfahrzeugs.

Der Türflügel 1 ist in der vertikalen Gebrauchslage gezeigt, und bezogen auf eine vertikale Ebene beispielsweise von außen gesehen konvex und von innen gesehen konkav ausgebildet. Folglich sind bezogen auf die vertikale Ebene auch die vertikalen Abschnitte 7 der Fensterlaibungen 6 ebenfalls von außen gesehen konvex und von innen gesehen konkav ausgebildet.

Der Türflügel 1 ist hier beispielsweise an seiner Außenseite vollständig von der transparenten Fensterscheibe bedeckt, so dass die Fensterlaibungen 6 des Türflügels 1 hier lediglich von der Innenseite zugänglich sind. An oder in beispielsweise seitengleichen vertikalen Abschnitten 7 der Fensterlaibungen 6 sind insbesondere als Nachrüstkomponenten zwei Lichtleisteneinrichtungen 8 zerstörungsfrei lösbar befestigt, beispielsweise durch Verschraubungen. Mit anderen Worten sind die beiden Lichtleisteneinrichtungen 8 an dem Türflügel 1 bevorzugt nachgerüstet worden, weil der Türflügel 1 zuvor nicht über Lichtleisteneinrichtungen 8 verfügte.

Damit die beiden Lichtleisteneinrichtungen 8 flexibel an beliebige Krümmungen von Türflügeln bzw. Fensterlaibungen angepasst werden können (z.B. durch Biegen), sind diese bevorzugt als flexible langgestreckte Körper mit geringer Dicke D ausgeführt.

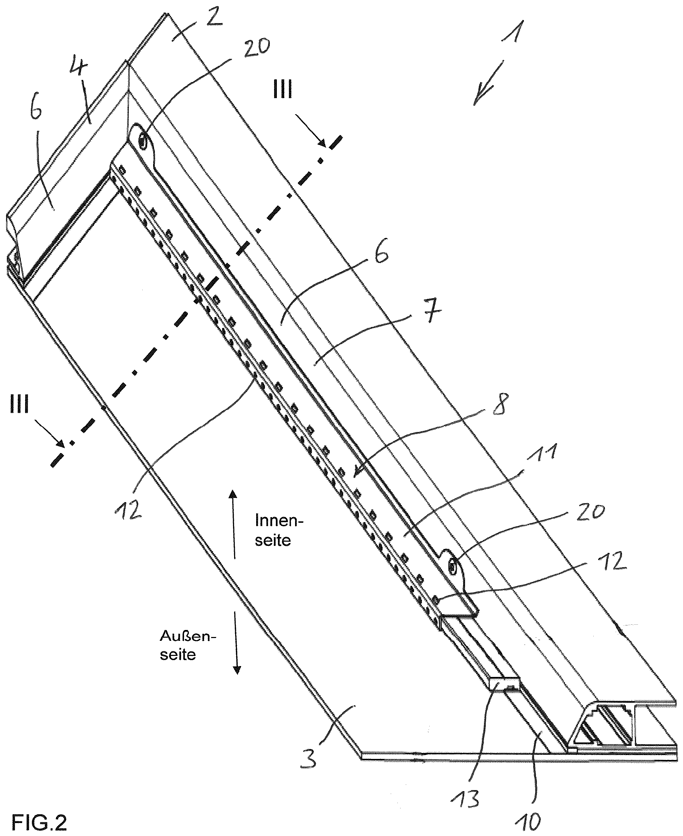

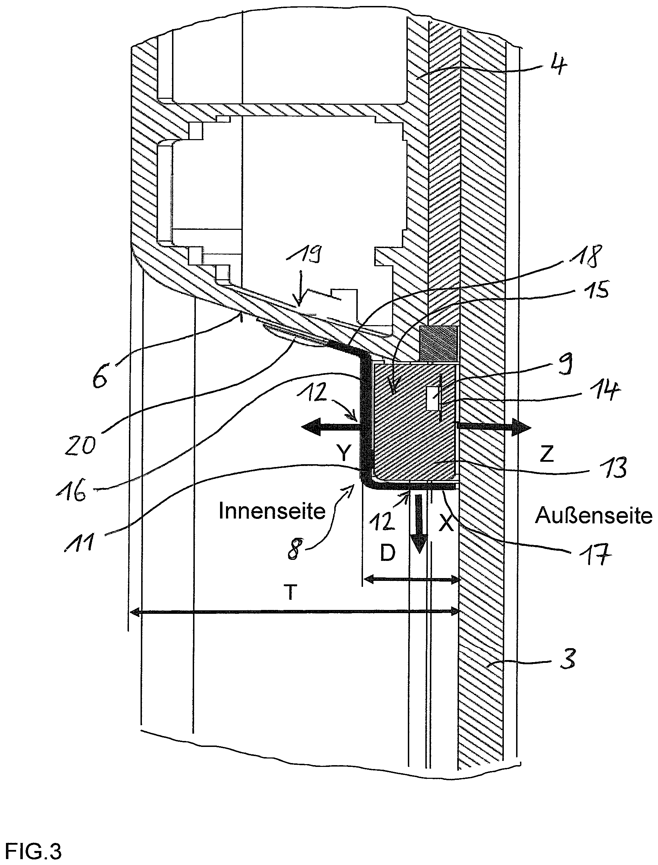

Wie aus **Fig. 2** und **Fig. 3** hervorgeht, weist eine Lichtleisteneinrichtung 8 hier beispielsweise eine mit einer Anzahl von bezögen auf die Längserstreckung in Reihe beabstandet angeordneten Lichtquellen 9 versehene Lichtleiste 10 auf, welche hier beispielsweise ein LED-Band 14 umfasst, wobei die Lichtquellen 9 durch LED's gebildet werden.

Darüber hinaus weist eine Lichtleisteneinrichtung 8 auch ein Halte- und Montageprofil 11 auf, in welchem die Lichtleiste 10 aufgenommen und durch welches die Lichtleiste 10 an der Fensterlaibung 6 gehalten ist. Wie insbesondere aus **Fig. 2** hervorgeht, weist das Halte- und Montageprofil mehrere Licht-Durchtrittsöffnungen 12 derart auf, dass von den Lichtquellen 9 der Lichtleiste 10 erzeugtes Licht durch die Licht-Durchtrittsöffnungen 12 hindurch nach außen dringen kann. Mit Ausnahme der Licht-Durchtrittsöffnungen 12 ist das Halte- und Montageprofil 11 bevorzugt opak.

Hier umfasst die Lichtleiste 10 beispielsweise einen transparenten Kunststoffkörper 13, in welchen das LED-Band 14 mit den in Reihe hintereinander beabstandet angeordneten Lichtquellen 9 (LED's) eingegossen oder eingespritzt ist. Der Kunststoffkörper 13 und das LED-Band 14 sind hier insbesondere flexibel oder elastisch ausgebildet.

Insbesondere weisen die Lichtleiste und insbesondere der Kunststoffkörper 13 im Querschnitt gesehen ein Außenprofil auf, welches komplementär zu einem Innenprofil des Halte- und Montageprofils 11 ausgebildet ist. Dann ist beispielsweise die Lichtleiste 10 und hier insbesondere der Kunststoffkörper 13 mit dem eingegossenen oder eingespritzten LED-Band 14 in einer zwischen der Halte- und Montageleiste 11, der Fensterlaibung 6 und der Fensterscheibe 3 ausgebildeten Kammer 15 gekammert, ohne dass beispielsweise eine mechanische oder sonstige formschlüssige Verbindung zwischen dem Halte- und Montageprofil 11 und der Lichtleiste 10 vorhanden oder notwendig ist.

Das Halte- und Montageprofil 11 ist beispielsweise aus einem Material gefertigt, welches derart flexibel ist, dass es aus einem geraden Zustand in einen gebogenen Zustand gebogen werden kann, um es an den gekrümmten Verlauf der Fensterlaibungen 6 anzupassen. Weil die Dicke der Wandungen des Halte- und Montageprofils 11 relativ gering ist und weil demgegenüber seine Längserstreckung relativ groß ist, kann eine solche Anpassung auch gelingen, wenn das Halte- und Montageprofil 11 aus einem Metall besteht, beispielsweise aus Aluminium. Alternativ könnte jegliches Material für das Halte- und Montageprofil verwendet werden, welches bezogen auf die Geometrie des Halte- und Montageprofils 11 ein begrenztes Biegen zulässt.

Das Halte- und Montageprofil 11 weist im Querschnitt gesehen beispielsweise einen parallel zur Lichtleiste 10 und zur Fensterscheibe 3 verlaufenden ersten Schenkel 16, einen parallel zur Lichtleiste 10 und senkrecht zur Fensterscheibe 3 verlaufenden und von dem ersten Schenkel 16 im Wesentlichen senkrecht abgekanteten zweiten Schenkel 17 sowie einen von dem ersten Schenkel 16 wegragenden dritten Schenkel 18 auf, welcher hier beispielsweise von dem zweiten Schenkel weg weist und welcher beispielsweise mit Bohrlöchern 19 versehen ist, um das Halte- und Montageprofil 11 insbesondere durch Schraubverbindungen 20 mit der Fensterlaibung 6 lösbar verbinden zu können. Hierzu weist die Fensterlaibung 6 Gewindebohrungen auf bzw. werden mit solchen versehen, wenn die Lichtleisteneinrichtungen 8 am Türflügel 1 nachgerüstet werden.

Der dritte Schenkel 18 ist hier bevorzugt lediglich zur Montage des Halte- und Montageprofils 11 an der Fensterlaibung 6 vorgesehen und weist keine Licht-Durchtrittsöffnung 12 auf, während der erste Schenkel 16 und der zweite Schenkel 17 jeweils mit mehreren, in der Längserstreckung gesehen beabstandet angeordneten Licht-Durchtrittsöffnungen 12 versehen sind. Vorzugsweise sind die Licht-Durchtrittsöffnungen 12 stets im Bereich der Lichtquellen 9 (LED's) in der Lichtleiste 10 angeordnet.

Da der erste mit Licht-Durchtrittsöffnungen 12 versehene Schenkel 16 parallel zur Fensterscheibe 3 und der zweite mit Licht-Durchtrittsöffnungen 12 versehene Schenkel 17 senkrecht zur Fensterscheibe 3 angeordnet ist, können ausgehend von den Lichtquellen 9 (LED's) Lichtsignale durch die Licht-Durchtrittsöffnungen 12 hindurch senkrecht und parallel zur Fensterscheibe 3 ausgesendet werden. Weil die Lichtleiste 10 hier die Fensterscheibe 3 direkt kontaktiert, werden Lichtsignale durch die Fensterscheibe 3 hindurch zur Außenseite des Türflügels 1 wie auch durch die Licht-Durchtrittsöffnungen 12 im ersten Schenkel 16 hindurch zur Innenseite des Türflügels 1 gesendet, wie durch die Pfeile Y und Z angedeutet ist. Weiterhin gelangen auch Lichtsignale durch die Licht-Durchtrittsöffnungen 12 im zweiten Schenkel 17 hindurch parallel zur Fensterscheibe 3 zur Innenseite des Türflügels, wie durch den Pfeil X angedeutet wird.

Wie außerdem aus **Fig. 2** und **Fig. 3** hervorgeht, kann die Dicke D der Lichtleisteneinrichtung 8 kleiner sein als die Tiefe T der Fensterlaibung 6, wobei dann die Lichtleisteneinrichtung 8 nicht über die Fensterlaibung 6 vorsteht. Die Lichtleisteneinrichtung 8 ist daher beispielsweise in der Fensterlaibung 6 oder in dem Türflügel 1 versenkt angeordnet.

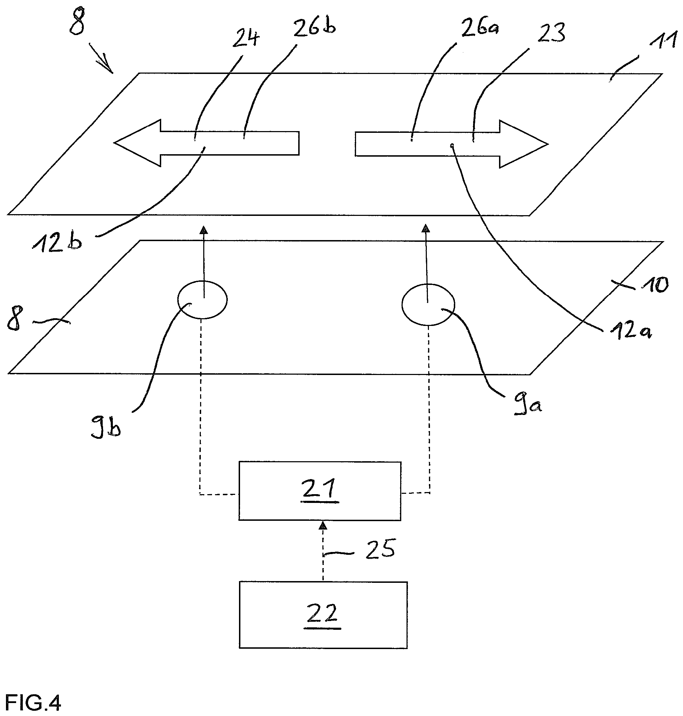

Mit diesen Maßnahmen können Fahrgästen, welche sich innerhalb und außerhalb des Schienenfahrzeugs befinden, Lichtsignale übermittelt werden, welche den gerade vorliegenden Status des Türflügels 1 signalisieren. Insbesondere sind die Lichtleisteneinrichtungen 8 zur optischen Kenntlichmachung der Türposition bzw. des Status des Türflügels 1 vorgesehen und von einer in **Fig. 4** gezeigten elektronischen Steuerung 21 koordiniert angesteuert. Diese elektronische Steuerung 21 empfängt hierzu ein Eingangssignal 25 von einer elektronische Türflügelsteuerung 22. Insofern weist die elektronische Steuerung ein Steueranschluss für das Eingangssignal auf und ist ausgebildet, dass Sie das Eingangssignal 25 verarbeiten kann. Die elektronische Steuerung 21 kann abhängig von einem Eingangssignal 25 wenigstens eine Lichtquelle 9a, 9b der Lichtquellen 9 der Lichtleiste 10 selektiv derart aktivieren oder ansteuert, dass sie Licht insbesondere in jeweils einer bestimmten Farbe abstrahlt.

Bei dem in **Fig. 4** gezeigten Beispiel ist eine Lichtleisteneinrichtung 8 an dem Türflügel 1 horizontal beispielsweise in einem horizontalen Abschnitt 27 der Fensterlaibung 6 angeordnet, welche an einem Quersteg 28 des Fensterrahmens 6 ausgebildet ist.

Beispielsweise kann ein Emittieren von grünem Licht signalisieren, dass der Türflügel 1 geöffnet werden kann (Öffnungsbereitschaft) oder gerade öffnet, von rotem Licht dagegen, dass der Türflügel 1 nicht geöffnet werden kann oder gerade schließt. Ein Blinken, d.h. ein abwechselnd stattfindendes Emittieren und Nicht-Emittieren von Licht kann bedeuten, dass der Türflügel 1 gerade geschlossen wird und deshalb ein Ein- und Aussteigen von Fahrgästen nicht mehr möglich ist.

Auf eine solche Signalisierung des Türflügelzustands bezieht sich die weitere, in **Fig. 4** gezeigte Ausführungsform. Dort ist eine erste, in die Wandung des Halte- und Montageprofils 11 beispielsweise eingestanzte Informationsdarstellungs-Durchtrittöffnung 12a im Umriss beispielsweise als ein erster Pfeil 23 ausgebildet, der hier beispielsweise in die Öffnungsrichtung des Türflügels 1 weist. Weiterhin ist auch eine zweite, in die Wandung des Halte- und Montageprofils 11 beispielsweise eingestanzte Informationsdarstellungs-Durchtrittöffnung 12b im Umriss beispielsweise als ein zweiter Pfeil 24 ausgebildet, der hier beispielsweise in die Schließrichtung des Türflügels 1 weist.

Allgemein kann daher wenigstens eine Licht-Durchtrittsöffnung 12 als Informationsdarstellungs-Durchtrittöffnung derart ausgeführt sein, dass der Umriss der Informationsdarstellungs-Durchtrittöffnung eine visuell darstellbare Information bildet. Die Information kann insbesondere wenigstens ein alphanummerisches Zeichen, eine Ziffer, einen Buchstaben, eine Graphik, ein Symbol und/oder ein Piktogramm umfassen. Unter einer visuell darstellbaren Information ist daher eine Information zu verstehen, welche von einem Menschen verstanden bzw. interpretiert werden kann, wenn er sie sieht.

Dabei können mehrere auf dem Halte- und Montageprofil 11 in Reihe hintereinander, übereinander oder untereinander angeordnete Informationsdarstellungs-Durchtrittöffnungen 12a, 12b vorgesehen sein, um Begriffe, Zahlen oder Wörter oder Kombinationen aus solchen mit Symbolen oder Piktogrammen als visuelle Informationen darstellen zu können.

Im Bereich der ersten, als erster Pfeil 23 ausgebildeten Informationsdarstellungs-Durchtrittöffnung 12a ist im Beispiel von Fig. 4 eine erste Lichtquelle und im Bereich der zweiten, als zweiter Pfeil 24 ausgebildeten Informationsdarstellungs-Durchtrittöffnung 12b eine zweite Lichtquelle 9b angeordnet. Vor dem Hintergrund, dass das Halte- und Montageprofil 11 die Lichtleiste 10 überdeckt oder übergreift (siehe Fig. 3), bedeutet dies, dass in Richtung senkrecht zur Lichtleiste 10 gesehen, die erste Lichtquelle 9a mit der ersten, als erster Pfeil 23 ausgebildeten Informationsdarstellungs-Durchtrittöffnung 12a und die zweite Lichtquelle 9b im Wesentlichen mit der zweiten, als zweiter Pfeil 24 ausgebildeten Informationsdarstellungs-Durchtrittöffnung 12b im Wesentlichen fluchtet. Mit anderen Worten überdeckt sich die erste Lichtquelle 9a mit der ersten, als erster Pfeil 23 ausgebildeten Informationsdarstellungs-Durchtrittöffnung 12a und die zweite Lichtquelle 9b mit der zweiten, als zweiter Pfeil 24 ausgebildeten Informationsdarstellungs-Durchtrittöffnung 12b in Richtung senkrecht zur Lichtleiste 10 gesehen, so dass das von der betreffenden Lichtquelle 9a oder 9b ausgestrahlte Licht im Wesentlichen direkt durch die betreffende Informationsdarstellungs-Durchtrittöffnung 12a oder 12b hindurch nach außen dringen kann. Durch das hindurchtretende Licht wird dann die durch die wenigstens eine Informationsdarstellungs-Durchtrittöffnung 12a oder 12b verkörperte visuelle Information hinterleuchtet, so dass die betreffenden Informationen, hier die beiden Pfeile 23 und 23 von einem Fahrgast des Schienenfahrzeugs von außen (z.B. an einem Bahnsteig oder einer Haltestelle) oder von innen (in einer Kabine oder in einem Schienenfahrzeugwagen) wahrgenommen werden können.

In dem Beispiel hier ist die erste Lichtquelle 9a eine LED, welche lediglich Licht in grüner Farbe abstrahlt und die zweite Lichtquelle 9b eine LED, welche lediglich Licht in roter Farbe abstrahlen kann.

Dies kann dadurch realisiert sein, dass die Lichtquellen 9a, 9b LED's unterschiedlicher Farbe des Lichts und/oder LED's mit einstellbarer Lichtfarbe umfassen, wobei die Einstellung der Farbe des Lichts durch die (elektronische) Steuerung gesteuert ist.

Die elektronische 21 Steuerung kann dann abhängig von einem Eingangssignal 25 selektiv entweder die erste Lichtquelle 9a oder die zweite Lichtquelle 9b derart aktivieren, dass sie Licht abstrahlt.

Mit anderen Worten kann dann die erste Informationsdarstellungs-Durchtrittöffnung 12a durch ein Licht erster Farbe und die zweite Informationsdarstellungs-Durchtrittöffnung 12b durch ein Licht zweiter Farbe hinterleuchtet werden. Abhängig von der Ansteuerung durch die Steuerung 21 kann daher eine erste Information mit einem Licht erster Farbe und eine zweite Information mit einem Licht zweiter Farbe hinterleuchtet werden.

Bezogen auf das obige Beispiel des Türzustands kann beispielsweise die Information: "Türe kann geöffnet werden" mit einem Licht grüner Farbe und die Information "Tür schließt" mit einem Licht roter Farbe hinterleuchtet werden. Die beiden Lichtquellen 9a und 9b sind hier also LED's unterschiedlicher Farbe des Lichts. Alternativ können die beiden Lichtquellen 9a und 9b aber auch als LED's unterschiedlicher Farbe des Lichts ausgebildet sein, d.h. die LED's können jeweils Licht lediglich nur einer Farbe abstrahlen, wenn sie von der Steuerung 21 angesteuert werden.

Wenn dann das von der elektronischen Türflügelsteuerung in die elektronische Steuerung 21 der Lichtleiste 10 eingesteuerte Eingangssignal 25 die Information umfasst, dass der Türflügel 1 geöffnet werden kann oder gerade öffnet, dann steuert die elektronische Steuerung 21 beispielsweise lediglich die erste Lichtquelle 9a an, damit der erste Pfeil 23 mit Licht in grüner Farbe hinterleuchtet wird. Dann können Fahrgäste des Schienenfahrzeugs den solchermaßen in grüner Farbe hinterleuchteten ersten Pfeil 23 als Hinweis auffassen, dass der betreffende Türflügel 1 beispielsweise durch ein Betätigen eines entsprechenden Betätigungsorgans geöffnet werden kann. In diesem Türflügelzustand wird dann die zweite Lichtquelle 9b nicht angesteuert, so dass der zweite Pfeil 24 nicht hinterleuchtet wird.

Wenn hingegen das von der elektronischen Türflügelsteuerung in die elektronische Steuerung 21 der Lichtleiste 10 eingesteuerte Eingangssignal 25 die Information umfasst, dass der Türflügel 1 geschlossen bleiben muss oder gerade schließt, dann steuert die elektronische Steuerung 21 beispielsweise lediglich die zweite Lichtquelle 9b an, damit der zweite Pfeil 24 mit Licht in roter Farbe hinterleuchtet wird. Dann können Fahrgäste des Schienenfahrzeugs den solchermaßen in roter Farbe hinterleuchteten zweiten Pfeil 24 als Hinweis auffassen, dass der betreffende Türflügel 1 geschlossen bleiben soll oder gerade schließt. In diesem Türflügelzustand wird dann die erste Lichtquelle 9a nicht angesteuert, so dass der erste Pfeil 23 nicht hinterleuchtet wird.

Alternativ oder zusätzlich können die beiden Licht-Durchtrittsöffnungen 12a und 12b auch mit jeweils einem Farbfilter 26a, 26b versehen sein, welcher lediglich eine Farbe (hier: "grün" oder "rot") des von der betreffenden Lichtquelle 9a oder 9b ausgestrahlten Lichts und durch die betreffende Informationsdarstellungs-Durchtrittöffnung 12a oder 12b passieren lässt.

Die Farbfilter 26a, 26b lassen hier daher nur eine bestimmte Farbe, d.h. eine Strahlung bestimmter Wellenlänge passieren und sind vorzugsweise in den betreffenden Licht-Durchtrittsöffnungen 12a und 12b angeordnet, d.h. sie verschließen zwar die Licht-Durchtrittsöffnungen 12a und 12b, sind aber für Licht mit einer bestimmten Farbe durchlässig. Dann sind keine LED's unterschiedlicher Farbe des Lichts und/oder LED's mit einstellbarer Lichtfarbe notwendig. Die jeweils dargestellte Farbe ist dann durch den betreffenden Farbfilter 26a, 26b in der betreffenden Informationsdarstellungs-Durchtrittöffnung 12a, 12b bedingt.

Ein erster Farbfilter 26a lässt dann beispielsweise von dem von der ersten Lichtquelle 9a erzeugten Licht lediglich Licht mit grüner Farbe durch die als erster Pfeil 23 ausgestaltete erste Informationsdarstellungs-Durchtrittöffnung 12a und ein zweiter Farbfilter 26b von dem von der zweiten Lichtquelle 9b erzeugten Licht lediglich Licht mit roter Farbe durch die als zweiter Pfeil 24 ausgestaltete zweite Informationsdarstellungs-Durchtrittöffnung 12b passieren.

Die Steuerung 21 aktiviert dann abhängig von dem Eingangssignal 25 selektiv die erste Lichtquelle 9a der Lichtleiste 10, wenn der Türflügel 1 geöffnet werden kann oder gerade öffnet und die zweite Lichtquelle 9b der Lichtleiste 10, wenn der Türflügel 1 geschlossen bleiben soll oder gerade schließt. Dann wird entweder der erste Pfeil 23 mit grüner Farbe oder der zweite Pfeil 24 mit roter Farbe beleuchtet.

Das in Bezug zu **Fig. 4** beschriebene Beispiel ist nicht auf jeweils einzelne Lichtquellen 9a, 9b beschränkt, vielmehr können erste und zweite Abschnitte von mehreren solcher Lichtquellen 9a, 9b vorgesehen sein, welche dann in der beschriebenen Weise angesteuert werden. Auch ist klar, dass der Türflügel 1 einen Türflügel eines ein- oder zweiflügeligen Einstiegssystems des Schienenfahrzeugs bilden kann, wobei dann beispielsweise jeder der Türflügel mit wenigstens einer solchen Lichtleisteneinrichtung 8 ausgestattet ist.

### Bezugszeichenliste

- 1: Türflügel
- 2: Türrahmen
- 3: Fensterscheibe
- 4: Fensterrahmen
- 5: Fensteröffnung
- 6: Fensterlaibung
- 7: Vertikaler Abschnitt
- 8: Lichtleisteneinrichtung
- 9: Lichtquelle
- 10: Lichtleiste
- 11: Halte- und Montageprofil
- 12: Licht-Durchtrittsöffnungen
- 12a: erste Informationsdarstellung-Durchtrittsöffnung
- 12b: zweite Informationsdarstellung-Durchtrittsöffnung
- 13: Kunststoffkörper
- 14: LED-Band
- 15: Kammer
- 16: erster Schenkel
- 17: zweiter Schenkel
- 18: dritter Schenkel
- 19: Bohrlöcher
- 20: Schraubverbindung
- 21: elektronische Steuerung
- 22: elektronische Türflügelsteuerung
- 23: erster Pfeil
- 24: zweiter Pfeil
- 25: Eingangssignal
- 26a: erster Pfeil
- 26b: zweiter Pfeil
- 27: horizontaler Abschnitt
- 28: Quersteg
- X: Pfeil
- Y: Pfeil
- Z: Pfeil
- D: Dicke
- T: Tiefe

## Patentansprüche

1. Türflügel (1) eines Einstiegssystems eines Schienenfahrzeugs mit
a) wenigstens einer Fensteröffnung (5), welche eine Fensterlaibung (6) aufweist, die an der Fensteröffnung (5) eine umlaufende innere und der Fensteröffnung (5) zugewandte Fläche ausbildet,
b) einer an oder in der Fensteröffnung (5) gehaltenen Fensterscheibe (3), wobei
c) die Lichtleisteneinrichtung (8) an oder in der Fensterlaibung (6) zerstörungsfrei lösbar befestigt ist, und wobei
d) die Lichtleisteneinrichtung (8) wenigstens aufweist:
d1) wenigstens eine mit einer Anzahl von in Reihe beabstandet angeordneten Lichtquellen (9; 9a, 9b) versehene Lichtleiste (10),
d2) wenigstens ein Halte- und Montageprofil (11), in welchem die wenigstens eine Lichtleiste (10) aufnehmbar und welche mit Mitteln (19) zur Anbringung an der Fensterlaibung (6) versehen ist, wobei
d3) das Halte- und Montageprofil (11) wenigstens eine Licht-Durchtrittsöffnung (12; 12a, 12b) derart aufweist, dass von den Lichtquellen (9; 9a, 9b) erzeugtes Licht durch die wenigstens eine Licht-Durchtrittsöffnung (12; 12a, 12b) hindurch dringt, und wobei
d4) das Halte- und Montageprofil (11) mit Ausnahme der wenigstens einen Licht-Durchtrittsöffnung (12; 12a, 12b) opak ist, **dadurch gekennzeichnet, dass**
e) die Lichtleisteneinrichtung (8) derart an oder in der Fensterlaibung angeordnet ist, dass von den Lichtquellen (9; 9a, 9b) erzeugtes Licht durch die Fensterscheibe (3) hindurch in Richtung (Z) einer Außenseite und in Richtung (Y) einer Innenseite des Türflügels gelangt, und dass die wenigstens eine Licht-Durchtrittsöffnung (12, 12a, 12b) derart angeordnet und ausgebildet ist, dass von den Lichtquellen (9; 9a; 9b) erzeugtes und durch die wenigstens eine Licht-Durchtrittsöffnung (12; 12a; 12b) tretendes Licht senkrecht zur Fensterscheibe (3) gerichtet ist.

2. Türflügel (1) nach Anspruch 1, **dadurch gekennzeichnet, dass** die Lichtleiste (10) durch einen flexiblen, langgestreckten und flachen Körper gebildet wird, an oder in welchem die Lichtquellen (9; 9a, 9b) in Reihe hintereinander beabstandet angeordnet sind.

3. Türflügel (1) nach Anspruch 2, **dadurch gekennzeichnet, dass** die Lichtleiste (10) einen wenigstens teilweise transparenten Kunststoffkörper (13) umfasst, in welchen ein LED-Band (14) mit den in Reihe hintereinander beabstandet angeordneten LED's als Lichtquellen (9; 9a, 9b) eingegossen oder eingespritzt ist.

4. Türflügel (1) nach einem der vorhergehenden Ansprüche, **dadurch gekennzeichnet, dass** die Lichtleisteneinrichtung (8) eine Steuerung (21) umfasst, welche abhängig von einem Eingangssignal (25) wenigstens eine Lichtquelle (9a, 9b) der Lichtleiste (10) insbesondere selektiv derart aktiviert, dass sie Licht abstrahlt.

5. Türflügel (1) nach Anspruch 4, **dadurch gekennzeichnet, dass** die wenigstens eine Licht-Durchtrittsöffnung (12a, 12b) als Informationsdarstellungs-Durchtrittöffnung derart ausgeführt ist, dass der Umriss der Informationsdarstellungs-Durchtrittöffnung (12a, 12b) eine visuell darstellbare Information bildet, oder dass in oder an der Licht-Durchtrittsöffnung (12a, 12b) ein transparenter Körper angeordnet ist, an welchem die visuell darstellbare Information abgebildet ist.

6. Türflügel (1) nach Anspruch 5, **dadurch gekennzeichnet, dass** die Information wenigstens ein alphanummerisches Zeichen, eine Graphik, ein Symbol (23, 24) und/oder ein Piktogramm umfasst.

7. Türflügel (1) nach Anspruch 5 oder 6, **dadurch gekennzeichnet, dass** die Steuerung (21) derart ausgebildet ist, dass sie abhängig von dem Eingangssignal (25) selektiv wenigstens eine Lichtquelle (9a, 9b) der Lichtleiste (10) aktiviert, welche im Bereich der Informationsdarstellungs-Durchtrittöffnung (12a, 12b) angeordnet ist.

8. Türflügel (1) nach einem der Ansprüche 5 bis 7, **dadurch gekennzeichnet, dass** die Lichtleiste (10) einen ersten Abschnitt von ersten Lichtquellen (9a) umfasst, welche Licht einer ersten Farbe ausstrahlen, und getrennt von dem ersten Abschnitt einen zweiten Abschnitt von zweiten Lichtquellen (9b), welche Licht einer zweiten, in Bezug auf die erste Farbe unterschiedlichen Farbe ausstrahlen.

9. Türflügel (1) nach Anspruch 8, **dadurch gekennzeichnet, dass** die Lichtquellen (9a, 9b)
a) LED's unterschiedlicher Farbe des Lichts umfassen, und/oder
b) LED's mit einstellbarer Lichtfarbe umfassen, wobei die Einstellung der Farbe des Lichts durch die Steuerung gesteuert ist.

10. Türflügel (1) nach Anspruch 8 oder 9, **dadurch gekennzeichnet, dass** der erste Abschnitt von ersten Lichtquellen (9a) im Bereich wenigstens einer ersten Informationsdarstellungs-Durchtrittöffnung (12a) angeordnet ist, welche eine erste Information darstellt, und dass der zweite Abschnitt von zweiten Lichtquellen (9b) im Bereich wenigstens einer zweiten Informationsdarstellungs-Durchtrittöffnung (12b) angeordnet ist, welche eine zweite, von der ersten Information abweichende Information darstellt.

11. Türflügel (1) nach Anspruch 10, **dadurch gekennzeichnet, dass** die Steuerung (21) abhängig von einem Eingangssignal (25) selektiv entweder den ersten Abschnitt von ersten Lichtquellen (9a) oder den zweiten Abschnitt von zweiten Lichtquellen (9b) derart aktiviert, dass er Licht abstrahlt.

12. Türflügel (1) nach einem der vorhergehenden Ansprüche, **dadurch gekennzeichnet, dass** wenigstens eine Licht-Durchtrittsöffnung (12a, 12b) mit einem Farbfilter (26a, 26b) versehen ist, welcher lediglich eine Farbe des von wenigstens einer Lichtquelle (9a, 9b) erzeugten und durch die wenigstens eine Licht-Durchtrittsöffnung (12a, 12b) hindurchtretenden Lichts passieren lässt oder eine bestimmte Farbe ausfiltert.

13. Türflügel (1) nach Anspruch 12, **dadurch gekennzeichnet, dass** wenigstens eine erste Licht-Durchtrittsöffnung (12a) mit einem ersten Farbfilter (26a) versehen ist, welcher eine erste Farbe des von wenigstens einer ersten Lichtquelle (9a) erzeugten und durch die erste Licht-Durchtrittsöffnungen (12a) hindurchtretenden Lichts passieren lässt oder ausfiltert, und dass wenigstens eine zweite Licht-Durchtrittsöffnung (12b) mit einem zweiten Farbfilter (26b) versehen ist, welcher eine zweite, von der ersten Farbe abweichende Farbe des von wenigstens einer zweiten Lichtquelle (9b) erzeugten und durch die wenigstens eine zweite Licht-Durchtrittsöffnung (12b) hindurchtretenden Lichts passieren lässt oder ausfiltert.

14. Türflügel (1) nach einem der Ansprüche 5 oder 6 und nach Anspruch 13, **dadurch gekennzeichnet, dass** die wenigstens eine erste Licht-Durchtrittsöffnung (12a) eine erste Informationsdarstellungs-Durchtrittöffnung bildet, welche eine erste Information darstellt, und dass die wenigstens eine zweite Licht-Durchtrittsöffnung (12b) eine zweite Informationsdarstellungs-Durchtrittöffnung bildet, welche eine zweite, von der ersten Information abweichende Information darstellt.

15. Türflügel (1) nach Anspruch 14, **dadurch gekennzeichnet, dass** die Steuerung (21) derart ausgebildet ist, dass sie abhängig von dem Eingangssignal (25) selektiv wenigstens eine erste Lichtquelle (9a) der Lichtleiste (10) aktiviert, welche im Bereich der wenigstens einen ersten Informationsdarstellungs-Durchtrittöffnung (12a) oder wenigstens eine zweite Lichtquelle (9b) der Lichtleiste (10) aktiviert, welche im Bereich der wenigstens einen zweiten Informationsdarstellungs-Durchtrittöffnung (12b) angeordnet ist.

16. Türflügel (1) nach einem der vorhergehenden Ansprüche, **dadurch gekennzeichnet, dass** die Lichtleiste (10) im Querschnitt gesehen ein Außenprofil aufweist, welches komplementär zu einem Innenprofil des Halte- und Montageprofils (11) ausgebildet ist.

17. Türflügel (1) nach einem der vorhergehenden Ansprüche, **dadurch gekennzeichnet, dass** die Lichtleisteneinrichtung (8) als Nachrüstkomponente zum nachträglichen Befestigen oder Nachrüsten an oder in der Fensterlaibung (6) des Türflügels (1) vorgesehen ist.

18. Türflügel (1) nach wenigstens einem der vorhergehenden Ansprüche, **dadurch gekennzeichnet, dass** die Lichtleisteneinrichtung (8) zur optischen Kenntlichmachung der Türposition oder des Zustands des Türflügels (1) vorgesehen und von einer elektronischen Steuerung angesteuert ist.

19. Türflügel (1) nach wenigstens einem der vorhergehenden Ansprüche, **dadurch gekennzeichnet, dass** die Lichtleisteneinrichtung (8) derart an oder in der Fensterlaibung angeordnet ist und die wenigstens eine Licht-Durchtrittsöffnung (12; 12a, 12b) derart angeordnet und ausgebildet ist, dass von den Lichtquellen (9; 9a, 9b) erzeugtes und durch die wenigstens eine Licht-Durchtrittsöffnung (12; 12a, 12b) tretendes Licht zusätzlich parallel zur Fensterscheibe (3) gerichtet ist und in Richtung (X) parallel zur Fensterscheibe (3) gelangen kann.

20. Einstiegssystem eines Schienenfahrzeugs mit wenigstens einer Türöffnung und einem Türflügel (1), welcher gegenüber der Türöffnung beweglich geführt ist, **dadurch gekennzeichnet, dass** der Türflügel (1) durch einen Türflügel nach einem der vorhergehenden Ansprüche gebildet wird.

## Claims

1. Door leaf (1) of a boarding system of a rail vehicle with
a) at least one window opening (5), which has a window reveal (6) that forms a surrounding inner surface facing the window opening (5) at the window opening (5),
b) a window pane (3) held on or in the window opening (5), wherein
c) the light strip apparatus (8) is fastened to or into the window reveal (6) so that it can be detached without damage, and wherein
d) the light strip apparatus (8) has at least:
d1) at least one light strip (10) provided with a number of light sources (9; 9a, 9b) arranged in series at distance from one another,
d2) at least one retaining and mounting profile (11), in which the at least one light strip (10) can be received and which is provided with means (19) for attachment to the window reveal (6), wherein
d3) the retaining and mounting profile (11) has at least one light through-opening (12; 12a, 12b) such that light generated by the light sources (9; 9a, 9b) passes through the at least one light through-opening (12; 12a, 12b), and wherein
d4) the retaining and mounting profile (11) is opaque with the exception of the at least one light through-opening (12; 12a, 12b), **characterized in that**
e) the light strip apparatus (8) is arranged on or in the window reveal such that light generated by the light sources (9; 9a, 9b) passes through the window pane (3) in direction (Z) of an outer side and in direction (Y) of an inner side of the door leaf, and **in that** the at least one light through-opening (12, 12a, 12b) is arranged and configured such that light generated by the light sources (9; 9a; 9b) and passing through the at least one light through-opening (12; 12a; 12b) is directed perpendicular to the window pane (3).

2. Door leaf (1) according to claim 1, **characterized in that** the light strip (10) is formed by a flexible, elongated and flat body, on or in which the light sources (9; 9a, 9b) are arranged in series one behind the other at a distance from one another.

3. Door leaf (1) according to claim 2, **characterized in that** the light strip (10) comprises an at least partially transparent plastic body (13), into which a LED strip (14), with LEDs as light sources (9; 9a, 9b) arranged in series one behind the other at a distance from one another, is cast or injected.

4. Door leaf (1) according to any one of the preceding claims, **characterized in that** the light strip apparatus (8) comprises a control device (21), which, depending on an input signal (25), activates at least one light source (9a, 9b) of the light strip (10), in particular selectively, such that it emits light.

5. Door leaf (1) according to claim 4, **characterized in that** the at least one light through-opening (12a, 12b) is configured as an information display through-opening such that the outline of the information display through-opening (12a, 12b) forms a visually displayable piece of information, or that a transparent body is arranged in or on the light through-opening (12a, 12b) on which the visually displayable information is depicted.

6. Door leaf (1) according to claim 5, **characterized in that** the information comprises at least one alphanumeric character, a graphic, a symbol (23, 24) and/or a pictogram.

7. Door leaf (1) according to claim 5 or 6, **characterized in that** the control device (21) is configured such that, depending on the input signal (25), it selectively activates at least one light source (9a, 9b) of the light strip (10) which is arranged in the region of the information display through-opening (12a, 12b).

8. Door leaf (1) according to any one of claims 5 to 7, **characterized in that** the light strip (10) comprises a first section of first light sources (9a) which emit light of a first color, and, separate from the first section, a second section of second light sources (9b) which emit light of a second color different from the first color.

9. Door leaf (1) according to claim 8, **characterized in that** the light sources (9a, 9b)
a) comprise LEDs of different light colors, and/or
b) comprise LEDs with adjustable light colors, wherein the setting of the light color is controlled by the control device.

10. Door leaf (1) according to claim 8 or 9, **characterized in that** the first section of first light sources (9a) is arranged in the region of at least one first information display through-opening (12a), which displays a first piece of information, and **in that** the second section of second light sources (9b) is arranged in the region of at least one second information display through-opening (12b), which displays a second piece of information different from the first piece of information.

11. Door leaf (1) according to claim 10, **characterized in that,** depending on an input signal (25), the control device (21) selectively activates either the first section of first light sources (9a) or the second section of second light sources (9b) such that it emits light.

12. Door leaf (1) according to any one of the preceding claims, **characterized in that** at least one light through-opening (12a, 12b) is provided with a color filter (26a, 26b), which only allows through one color of the light generated by at least one light source (9a, 9b) and passing through the at least one light through-opening (12a, 12b) or filters out a specific color.

13. Door leaf (1) according to claim 12, **characterized in that** at least one first light through-opening (12a) is provided with a first color filter (26a), which allows through a first color of the light generated by at least one first light source (9a) and passing through the first light through-openings (12a) or filters it out, and **in that** at least one second light through-opening (12b) is provided with a second color filter (26b) which allows through or filters out a second color, different from the first color, of the light generated by at least one second light source (9b) and passing through the at least one second light through-opening (12b).

14. Door leaf (1) according to any one of claims 5 or 6 and according to claim 13, **characterized in that** the at least one first light through-opening (12a) forms a first information display through-opening which displays a first piece of information, and **in that** the at least one second light through-opening (12b) forms a second information display through-opening, which displays a second piece of information different from the first piece of information.

15. Door leaf (1) according to claim 14, **characterized in that** the control device (21) is configured such that, depending on the input signal (25), it selectively activates at least one first light source (9a) of the light strip (10), which is arranged in the region of the at least one first information display through-opening (12a) or at least one second light source (9b) of the light strip (10), which is arranged in the region of the at least one second information display through-opening (12b).

16. Door leaf (1) according to any one of the preceding claims, **characterized in that** the light strip (10), viewed in cross-section, has an outer profile, which is complementary to an inner profile of the retaining and mounting profile (11).

17. Door leaf (1) according to any one of the preceding claims, **characterized in that** the light strip apparatus (8) is provided as a retrofit component for subsequent fastening or retrofitting to or into the window reveal (6) of the door leaf (1).

18. Door leaf (1) according to at least one of the preceding claims, **characterized in that** the light strip apparatus (8) is provided to give a visual indication of the door position or status of the door leaf (1) and is controlled by an electronic control device.

19. Door leaf (1) according to at least one of the preceding claims, **characterized in that** the light strip apparatus (8) is arranged on or in the window reveal and the at least one light through-opening (12; 12a, 12b) is arranged and configured such that light generated by the light sources (9; 9a, 9b) and passing through the at least one light through-opening (12; 12a, 12b) is additionally directed parallel to the window pane (3) and can travel in direction (X) parallel to the window pane (3).

20. Boarding system of a rail vehicle with at least one door opening and a door leaf (1), which is guided movably with respect to the door opening, **characterized in that** the door leaf (1) is formed by a door leaf according to any one of the preceding claims.

## Revendications

1. Battant de porte (1) d'un système d'accès d'un véhicule ferroviaire avec
a) au moins une ouverture de fenêtre (5), laquelle présente un encadrement de fenêtre (6) qui forme, au niveau de l'ouverture de fenêtre (5), une surface intérieure circonférentielle tournée vers l'ouverture de fenêtre (5),
b) une vitre de fenêtre (3) maintenue sur ou dans l'ouverture de fenêtre (5), dans lequel
c) l'appareil à barrettes lumineuses (8) est fixé de manière amovible et non destructive sur ou dans l'encadrement de fenêtre (6), et dans lequel
d) l'appareil à barrettes lumineuses (8) présente au moins :
d1) au moins une barrette lumineuse (10) dotée d'un certain nombre de sources de lumière (9 ; 9a, 9b) disposées en série à distance les unes des autres,
d2) au moins un profilé de maintien et de montage (11), dans lequel la au moins une barrette lumineuse (10) peut être logée et lequel est doté de moyens (19) pour l'application sur l'encadrement de fenêtre (6), dans lequel
d3) le profilé de maintien et de montage (11) présente au moins une ouverture de passage de lumière (12 ; 12a, 12b) de sorte que de la lumière générée par les sources de lumière (9 ; 9a, 9b) traverse la au moins une ouverture de passage de lumière (12 ; 12a, 12b), et dans lequel
d4) le profilé de maintien et de montage (11) est opaque à l'exception de la au moins une ouverture de passage de lumière (12 ; 12a, 12b), **caractérisé en ce que**
e) l'appareil à barrettes lumineuses (8) est disposé sur ou dans l'encadrement de fenêtre de sorte que de la lumière générée par les sources de lumière (9 ; 9a, 9b) traverse la vitre de fenêtre (3) en direction (Z) d'un côté extérieur et en direction (Y) d'un côté intérieur du battant de porte, et **en ce que** la au moins une ouverture de passage de lumière (12, 12a, 12b) est disposée et conçue de sorte que de la lumière générée par les sources de lumière (9 ; 9a ; 9b) et passant à travers la au moins une ouverture de passage de lumière (12 ; 12a ; 12b) est dirigée perpendiculairement à la vitre de fenêtre (3).

2. Battant de porte (1) selon la revendication 1, **caractérisé en ce que** la barrette lumineuse (10) est formée par un corps flexible, allongé et plat, sur ou dans lequel les sources de lumière (9 ; 9a, 9b) sont disposées de manière espacée les unes derrière les autres en série.

3. Battant de porte (1) selon la revendication 2, **caractérisé en ce que** la barrette lumineuse (10) comprend un corps en plastique (13) au moins partiellement transparent, dans lequel une bande LED (14) est moulée ou injectée avec les LED disposées de manière espacée les unes derrière les autres en série en tant que sources de lumière (9 ; 9a, 9b).

4. Battant de porte (1) selon l'une quelconque des revendications précédentes, **caractérisé en ce que** l'appareil à barrettes lumineuses (8) comprend une commande (21), laquelle, en fonction d'un signal d'entrée (25), active au moins une source de lumière (9a, 9b) de la barrette lumineuse (10), en particulier de manière sélective, de sorte qu'elle émet de la lumière.

5. Battant de porte (1) selon la revendication 4, **caractérisé en ce que** la au moins une ouverture de passage de lumière (12a, 12b) est conçue en tant qu'ouverture de passage d'affichage d'information de sorte que le pourtour de l'ouverture de passage de représentation d'information (12a, 12b) forme une information visuellement représentable, ou **en ce qu'**un corps transparent est disposé dans ou sur l'ouverture de passage de lumière (12a, 12b) sur lequel l'information visuellement représentable est représentée.

6. Battant de porte (1) selon la revendication 5, **caractérisé en ce que** l'information comprend au moins un caractère alphanumérique, un graphique, un symbole (23, 24) et/ou un pictogramme.

7. Battant de porte (1) selon la revendication 5 ou 6, **caractérisé en ce que** la commande (21) est conçue de sorte qu'elle active de manière sélective, en fonction du signal d'entrée (25), au moins une source de lumière (9a, 9b) de la barrette lumineuse (10) qui est disposée au niveau de l'ouverture de passage de représentation d'information (12a, 12b).

8. Battant de porte (1) selon l'une quelconque des revendications 5 à 7, **caractérisé en ce que** la barrette lumineuse (10) comprend une première section de premières sources de lumière (9a), lesquelles émettent de la lumière d'une première couleur et, séparée de la première section, une seconde section de secondes sources de lumière (9b), lesquelles émettent de la lumière d'une seconde couleur différente de la première couleur.

9. Battant de porte (1) selon la revendication 8, **caractérisé en ce que** les sources de lumière (9a, 9b)
a) comprennent des LED de différentes couleurs de la lumière, et/ou
b) comprennent des LED avec de la couleur de lumière réglable, dans lequel le réglage de la couleur de la lumière est commandé par la commande.

10. Battant de porte (1) selon la revendication 8 ou 9, **caractérisé en ce que** la première section des premières sources de lumière (9a) est disposée au niveau d'au moins une première ouverture de passage de représentation d'information (12a), laquelle représente une première information, et **en ce que** la seconde section de secondes sources de lumière (9b) est disposée au niveau d'au moins une seconde ouverture de passage de représentation d'information (12b), laquelle représente une seconde information différente de la première information.

11. Battant de porte (1) selon la revendication 10, **caractérisé en ce que** la commande (21) active de manière sélective, en fonction d'un signal d'entrée (25), soit la première section de premières sources de lumière (9a), soit la seconde section de secondes sources de lumière (9b), de sorte qu'elle émet de la lumière.

12. Battant de porte (1) selon l'une quelconque des revendications précédentes, **caractérisé en ce qu'**au moins une ouverture de passage de lumière (12a, 12b) est dotée d'un filtre de couleur (26a, 26b), lequel laisse passer uniquement une couleur de la lumière générée par au moins une source de lumière (9a, 9b) et traversant la au moins une ouverture de passage de lumière (12a, 12b).

13. Battant de porte (1) selon la revendication 12, **caractérisé en ce qu'**au moins une première ouverture de passage de lumière (12a) est dotée d'un premier filtre de couleur (26a), lequel laisse passer ou filtre une première couleur de la lumière générée par au moins une première source de lumière (9a) et traversant la première ouverture de passage de lumière (12a), et **en ce qu'**au moins une seconde ouverture de passage de lumière (12b) est dotée d'un second filtre de couleur (26b), lequel laisse passer ou filtre une seconde couleur différente de la première couleur, de la lumière générée par au moins la au moins une seconde source de lumière (9b) et traversant la au moins une seconde ouverture de passage de lumière (12b).

14. Battant de porte (1) selon l'une quelconque des revendications 5 ou 6 et selon la revendication 13, **caractérisé en ce que** la au moins une première ouverture de passage de lumière (12a) forme une première ouverture de passage de représentation d'information, laquelle représente une première information, et **en ce que** la au moins une seconde ouverture de passage de lumière (12b) forme une seconde ouverture de passage de représentation d'information qui représente une seconde information différente de la première information.

15. Battant de porte (1) selon la revendication 14, **caractérisé en ce que** la commande (21) est conçue de sorte qu'elle active de manière sélective, en fonction du signal d'entrée (25), au moins une première source de lumière (9a) de la barrette lumineuse (10), laquelle est activée au niveau de la au moins une première ouverture de passage de représentation d'information (12a) ou au moins une seconde source de lumière (9b) de la barrette lumineuse (10), laquelle est disposée au niveau de la au moins une seconde ouverture de passage de représentation d'information (12b).

16. Battant de porte (1) selon l'une quelconque des revendications précédentes, **caractérisé en ce que** la barrette lumineuse (10) présente, vue en section transversale, un profilé extérieur, lequel est complémentaire d'un profilé intérieur du profilé de maintien et de montage (11).

17. Battant de porte (1) selon l'une quelconque des revendications précédentes, **caractérisé en ce que** l'appareil à barrettes lumineuses (8) est prévu en tant que composant de rééquipement pour une fixation ou un rééquipement ultérieur sur ou dans l'encadrement de fenêtre (6) du battant de porte (1).

18. Battant de porte (1) selon au moins l'une quelconque des revendications précédentes, **caractérisé en ce que** l'appareil à barrettes lumineuses (8) est prévu pour signaler visuellement la position de porte ou l'état du battant de porte (1) et est commandé par une commande électronique.

19. Battant de porte (1) selon au moins l'une quelconque des revendications précédentes, **caractérisé en ce que** l'appareil à barrettes lumineuses (8) est disposé de telle manière sur ou dans l'encadrement de fenêtre et la au moins une ouverture de passage de lumière (12 ; 12a, 12b) est disposée et conçue de sorte que la lumière générée par les sources de lumière (9 ; 9a, 9b) et passant à travers la au moins une ouverture de passage de lumière (12 ; 12a, 12b) est en outre dirigée parallèlement à la vitre de fenêtre (3) et peut arriver en direction (X) parallèlement à la vitre de fenêtre (3).

20. Système d'accès d'un véhicule ferroviaire avec au moins une ouverture de porte et un battant de porte (1), lequel est guidé de manière mobile par rapport à l'ouverture de porte, **caractérisé en ce que** le battant de porte (1) est formé par un battant de porte selon l'une quelconque des revendications précédentes.
